Europäisches Patentamt

European Patent Office

Office européen des brevets

(11) Veröffentlichungsnummer : **0 144 597**
**B1**

(12) # EUROPÄISCHE PATENTSCHRIFT

(45) Veröffentlichungstag der Patentschrift :
30.12.86

(51) Int. Cl.⁴ : **C 04 B   7/43**

(21) Anmeldenummer : 84111811.0

(22) Anmeldetag : 03.10.84

(54) Verfahren und Anlage zur Wärmebehandlung von feinkörnigem Gut.

(30) Priorität : 25.11.83 DE 3342687

(43) Veröffentlichungstag der Anmeldung :
19.06.85 Patentblatt 85/25

(45) Bekanntmachung des Hinweises auf die Patenterteilung : 30.12.86 Patentblatt 86/52

(84) Benannte Vertragsstaaten :
BE DE FR GB

(56) Entgegenhaltungen :
EP-A- 0 002 054
DE-A- 2 416 528
DE-A- 2 708 486
FR-A- 2 290 644
GB-A- 2 081 855

(73) Patentinhaber : Krupp Polysius AG
Graf-Galen-Strasse 17
D-4720 Beckum (DE)

(72) Erfinder : Kreft, Wilfried, Dipl.-Ing.
Kirschweg 12
D-4722 Ennigerloh (DE)
Erfinder : Kretzer, Horst, Ing. grad.
Tannenberg Strasse 4
D-4720 Beckum (DE)
Erfinder : Thiemeyer, Heinz-Werner, Dipl.-Ing.
Buchenweg 12
D-4722 Ennigerloh (DE)

(74) Vertreter : Tetzner, Volkmar, Dr.-Ing. Dr. Jur.
Van-Gogh-Strasse 3
D-8000 München 71 (DE)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Wärmebehandlung von feinkörnigem Gut entsprechend dem Oberbegriff des Anspruches 1, ferner eine Anlage zur Durchführung dieses Verfahrens.

Ein Verfahren dieser Art ist durch die DE-A-27 52 323 bekannt. Der aus dem Kühler abgezogene Kühlluftstrom wird hierbei in mehrere Teilströme aufgeteilt, die an unterschiedlichen Umfangsstellen in die von den Ofenabgasen durchströmte, die Vorcalcinationszone bildende Gasleitung eingeführt werden. Entsprechende Teilmengen des vorgewärmten Gutes werden in die Kühlluftteilströme unmittelbar vor dem Eintritt in die Ofenabgasleitung eingebracht. Abgesehen von den Einmündungen der Gutleitungen mit ihnen zugeordneten Ablenkorganen und von Brennern sind in den Kühlluft-Teilstrom-Leitungen keinerlei Einbauten vorgesehen. Die beiden Teilströme des Brennstoff-Gut-Luft-Gemisches treten dabei jeweils im wesentlichen in geradliniger Ausrichtung, d. h. etwa laminar in die Ofenabgasleitung ein.

Ein aus DE-A-27 08 486 bekanntes Verfahren dient in erster Linie zur Herstellung von alkaliarmem Zementklinker, wozu die Ofenabgase z. B. mit Hilfe von Kühlerabluft in einer gesonderten Mischeinrichtung zum Teil abgekühlt werden, die in der Ofenabgasleitung angeordnet ist, während eine vollkommen gesondert ausgeführteund angeordnete Calciniereinrichtung nur mit erwärmter Luft aus dem Kühler versorgt wird.

Weiterhin ist aus DE-A-24 16 528 ein Verfahren bekannt, das mit einer Wärmebehandlungsanlage betrieben wird, bei der in der Ofenabgasleitung — in Gasströmungsrichtung betrachtet — zunächst eine Einschnürung und dann etwa in der oberen Hälfte ein zyklonabscheiderartiger Oberteil ausgebildet sind, wobei der untere Abschnitt dieses Oberteiles mit mehreren Brennern ausgestattet ist und in diesen Abschnitt tangential eine einzige Kühlerabluftleitung einmündet.

Aus FR-A-22 90 644 ist es außerdem bekannt, einen mit zwei koaxial übereinandergebauten, zyklonabscheiderartigen Teilen ausgebildeten gesonderten Calcinierofen vorzusehen, in dessen unteres Ende die Ofenabgasleitung und in dessen mittleren Bereich eine einzelne Kühlluftleitung einmündet, während an seinem obersten Ende ein Brenner angeordnet ist.

Des weiteren wird bei einem aus GB-A-20 81 8-55 bekannten Verfahren der aus dem Drehrohrofen kommende Abgasstrom zunächst in zwei Teilströme aufgeteilt, von denen der eine Teilstrom von unten her direkt in eine Calcinationszone eingeleitet wird, die von einem konstruktiv besonders ausgestalteten Calcinationsreaktor gebildet wird. In diesen Calcinationsreaktor wird das Gut direkt eingeleitet, und darunter mündet ein horizontal verlaufender Abschnitt einer einzigen Kühlerabluftleitung tangential ein, wodurch innerhalb des Reaktors eine Turbulenz erzeugt werden soll. Der zweite Ofenabgasstrom wird in das obere Ende des Calcinationsreaktors eingeleitet.

Bis auf das zuerst erläuterte bekannte Verfahren betreffen somit alle übrigen bekannten Verfahren Ausführungen, die sich von dem Verfahren vollkommen unterscheiden, das nach dem Oberbegriff des Anspruches 1 vorausgesetzt wird.

Der Erfindung liegt nun die Aufgabe zugrunde, dieses als bekannt vorausgesetzte Verfahren dahin weiterzuentwickeln, daß eine Verbesserung des Brennstoffausbrandes und eine Steigerung der Verbrennungsgeschwindigkeit erreicht wird.

Diese Aufgabe wird erfindungsgemäß durch die kennzeichnenden Merkmale des Anspruches 1 gelöst.

Während bei allen oben erläuterten bekannten Ausführungen die einzigen oder geteilten Kühlluftströme weitgehend geradlinig bzw. laminar bis an die Einmündungsstelle an der Calcinationszone herangeführt werden, wird bei dem erfindungsgemäßen Verfahren den beiden Kühlluftteilströmen vor ihrem Eintritt in die Ofenabgasleitung ein Drall aufgeprägt. Durch diesen Drall ergibt sich eine Intensivierung der Vermischung von Gut, Brennstoff und Kühlluft in der Vorcalcinationszone und damit eine deutliche Verbesserung des Brennstoffausbrandes und eine Steigerung der Verbrennungsgeschwindigkeit.

Gemäß einer zweckmäßigen Ausgestaltung der Erfindung wird den beiden Kühlluftteilströmen vor ihrem Eintritt in die Ofenabgasleitung ein gegensinniger Drall aufgeprägt, dessen Richtung so gewählt ist, daß die beiden Kühlluftteilströme in dem Bereich des Querschnitts der Ofenabgasleitung, in dem die Ofenabgase ihre größte aufwärts gerichtete Geschwindigkeit besitzen, eine nach abwärts gerichtete Geschwindigkeitskomponente aufweisen.

Bei dieser zweckmäßigen Ausgestaltung der Erfindung wird von der Erkenntnis Gebrauch gemacht, daß in der die Vorcalcinationszone bildenden, von den Ofenabgasen von unten nach oben durchströmten Ofenabgasleitung aufgrund der Umlenkung der Ofenabgase (von ihrer annähernd horizontalen Strömungsrichtung am Austritt aus dem Drehrohrofen in eine etwa vertikale Strömungsrichtung im unteren Teil der Ofenabgasleitung) ein über den Querschnitt der Ofenabgasleitung ungleichmäßiges Geschwindigkeitsprofil herrscht. Die größte Geschwindigkeit ist im äußeren Querschnittsbereich der Strömung und die kleinste Geschwindigkeit im inneren Querschnittsbereich der umgelenkten Strömung vorhanden.

Wird nun den beiden Kühlluftteilströmen vor ihrem Eintritt in die Ofenabgasleitung ein gegensinniger Drall aufgeprägt, dessen Richtung so gewählt ist, daß die beiden Kühlluftteilströme in dem äußeren Bereich des Querschnitts der Ofenabgasleitung, in dem die Ofenabgase ihre größte aufwärts gerichtete Geschwindigkeit besitzen, eine nach abwärts gerichtete Geschwindigkeitskomponente aufweisen, so besitzen die beiden Kühlluftteilströme in dem inneren Bereich des Querschnitts der Ofenabgasleitung, in dem die Ofenabgase ihre kleinste aufwärts gerichtete Geschwindigkeit besitzen, eine nach oben gerichtete Geschwindigkeitskomponente. Dadurch wird eine Vergleichmäßigung der Geschwindigkeit der resultierenden Gasströmung erreicht, was zu einer weiteren Verbesserung des Brennstoffausbrandes und einer weiteren Steigerung der Verbrennunsgeschwindigkeit führt.

Eine weitere Verbesserung des Brennstoffausbrandes läßt sich dadurch erreichen, daß die beiden Brennstoffteilströme gleichsinnig mit den zugehörigen Kühlluftteilströmen verdrallt werden. Die hohe Turbulenz und die Vergleichmäßigung des Geschwindigkeitsprofiles über den Querschnitt der Ofenabgasleitung führt an der Stelle des Zusammenpralles der Kühlluftteilströme, des Ofenabgasstromes, der Brennstoffteilströme und der Gutteilströme zu einer sehr schnellen und gleichmäßigen Vermischung von Gut, Brennstoff und Gasen, was sich positiv auf den Brennstoffausbrand auswirkt.

Ein Ausführungsbeispiel der Erfindung ist in der Zeichnung veranschaulicht. Es zeigen

Figur 1 eine Stirnansicht auf die Vorcalcinationszone,

Figuren 1a und 1b Ansichten der beiden Kühlluftleitungen in Richtung der Pfeile A und B,

Figur 2 eine Seitenansicht der Anlage gemäß Fig. 1.

Die in der Zeichnung nur in den für das Verständnis der Erfindung wesentlichen Teilen veranschaulichte Anlage zur Wärmebehandlung von feinkörnigem Gut, insbesondere zur Herstellung von Zement, enthält einen Drehrohrofen 1, einen von den Abgasen des Drehrohrofens durchströmten, im einzelnen nicht dargestellten Vorwärmer (insbesondere einen mehrstufigen Zyklonwärmetauscher) sowie einen gleichfalls nicht dargestellten Kühler.

Der Drehrohrofen 1 steht mit dem Vorwärmer über eine Ofenabgasleitung 2 in Verbindung, die eine mit zusätzlichem Brennstoff versorgte Vorcalcinationszone zur Calcination des vorgewärmten Gutes vor Eintritt in den Drehrohrofen bildet.

Vom Kühler führen zwei Kühlluftleitungen 3, 4 zur Ofenabgasleitung 2 und münden unter einem Winkel $\alpha$ gegenüber der Vertikalen von 45 bis 60° an zwei einander etwa diametral gegenüberliegenden Umfangsstellen in die Ofenabgasleitung 2 ein.

An diese beiden Kühllufttleitungen 3, 4 sind vor ihrer Einmündung in die Ofenabgasleitung 2 Gutaustragsleitungen 5, 6 des Vorwärmers angeschlossen.

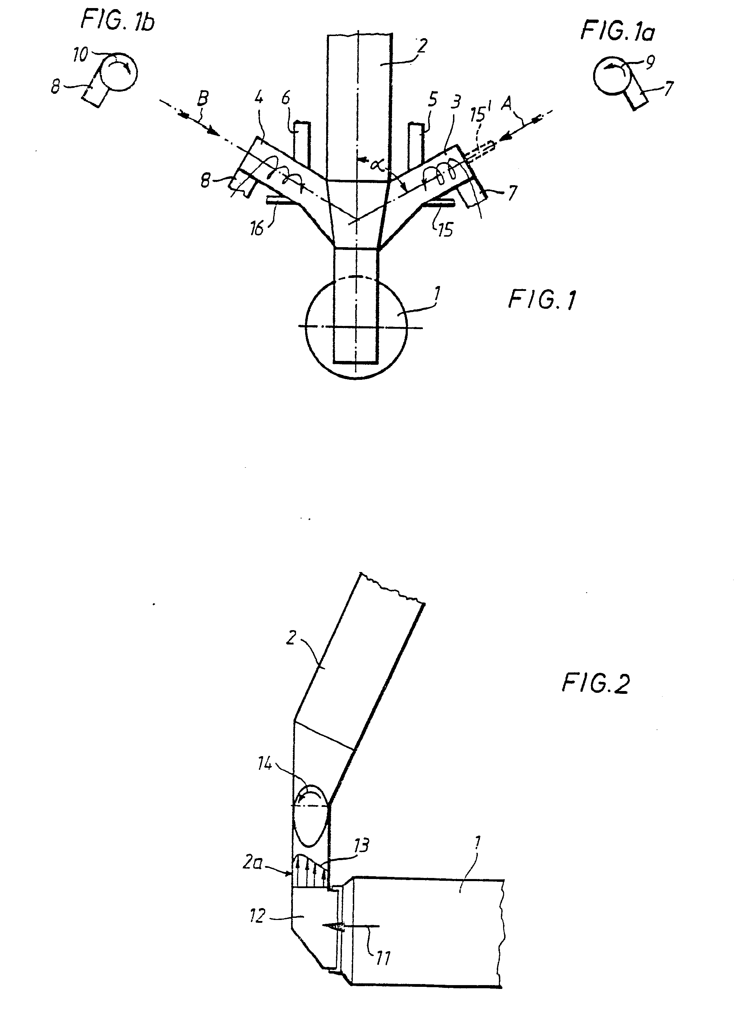

Die beiden Kühlluftleitungen 3, 4 sind vor ihrer Einmündung in die Ofenabgasleitung 2 mit Drallerzeugungseinrichtungen 7, 8 versehen, die durch tangentiale Eintrittsspiralen gebildet werden. Durch diese Einrichtungen 7, 8 wird den beiden Kühlluftteilströmen in den Leitungen 3, 4 ein gegensinniger Drall aufgeprägt, dessen Richtung durch die Pfeile 9, 10 veranschaulicht ist. In Richtung des Pfeiles A gesehen besitzt somit der durch die Kühlluftleitung 3 zugeführte Kühlluftteilstrom einen Linksdrall, während der durch die Kühlluftleitung 4 zugeführte Kühlluftteilstrom — in Richtung des Pfeiles B gesehen — einen Rechtsdrall aufweist. Der hierdurch erzielte Effekt sei anhand von Fig. 2 erläutert.

Die in etwa waagerechter Richtung (Pfeil 11) aus dem Drehrohrofen 1 austretenden Ofenabgase werden im Einlaufgehäuse 12 des Drehrohrofens in etwa vertikale Richtung umgelenkt und strömen durch die Ofenabgasleitung 2 dem Vorwärmer zu. Durch diese Umlenkung ergibt sich im unteren Teil 2a der Ofenabgasleitung 2 das in Fig. 2 angedeutete Geschwindigkeitsprofil 13: Die Geschwindigkeit der umgelenkten Ofenabgase ist im äußeren Querschnittsbereich größer als im inneren Querschnittsbereich.

Durch den gegensinnigen Drall, der den beiden Kühlluftteilströmen durch die Drallerzeugungseinrichtungen 7, 8 aufgeprägt wird, treten nun diese beiden Kühlluftteilströme in die Ofenabgasleitung 2 mit einem Drehsinn ein, der in Fig. 2 durch den Pfeil 14 gekennzeichnet ist. Man erkennt, daß die Richtung dieses Dralles so gewählt ist, daß die beiden Kühlluftteilströme im äußeren Bereich des Querschnitts der Ofenabgasleitung, in dem die Ofenabgase ihre größte aufwärts gerichtete Geschwindigkeit besitzen, eine nach abwärts gerichtete Geschwindigkeitskomponente aufweisen, während die beiden Kühlluftteilströme umgekehrt im inneren Bereich des Querschnitts der Ofenabgasleitung, in dem die Ofenabgase ihre kleinste aufwärts gerichtete Geschwindigkeit aufweisen, eine nach oben gerichtete Geschwindigkeitskomponente besitzen. Dadurch ergibt sich eine erwünschte Vergleichmäßigung der resultierenden Geschwindigkeit über den gesamten Querschnitt der Ofenabgasleitung, was zusammen mit der durch die Einmischung der verdrallten Kühlluftteilströme bedingten Turbulenz zu einer wesentlichen Verbesserung des Brennstoffausbrandes führt.

Der Brennstoff wird bei dem dargestellten Ausführungsbeispiel im Bereich der Unterseite der Kühlluftleitungen 3, 4 zugeführt (Brennstoffzuführungen 15, 16). Statt dessen ist auch eine axiale Zuführung im Bereich der Drallerzeugungseinrichtungen 7, 8 möglich, wie dies durch die Brennstoffzuführung 15' angedeutet ist. Zweckmäßig sind auch die Brennstoffzuführungen 15, 16 mit Einrichtungen zur Erzeugung eines Dralles versehen, der mit dem Drall des zugehörigen Kühlluftteilstromes gleichsinnig ist.

Die Stärke des Dralles der beiden Kühlluftteilströme steigt mit zunehmender Eintrittsgeschwindigkeit in die Drallerzeugungseinrichtungen 7, 8. Die Strömungsgeschwindigkeit der Kühlluftteilströme in einer zur Drallerzeugung dienenden Eintrittsspirale besitzt zweckmäßig den zwei- bis fünffachen Wert der in der anschließenden Leitung 3 bzw. 4 zwischen dieser Eintrittsspirale (Drallerzeugungseinrichtung 7 bzw. 8) und der Ofenabgasleitung 2 herrschenden Strömungsgeschwindigkeit.

**Patentansprüche**

1. Verfahren zur Wärmebehandlung von feinkörnigem Gut, insbesondere zur Herstellung von Zement, wobei das Gut in einem Vorwärmer vorgewärmt, in einer Vorcalcinationszone unter Zugabe von zusätzlichem Brennstoff weitererhitzt, in einem Drehrohrofen fertiggebrannt und in einem Kühler gekühlt wird, wobei ein aus dem Kühler abgezogener Kühlluftstrom in wenigstens zwei Teilströme aufgeteilt wird, in die zwei Teilströme des vorgewärmten Gutes eingeführt werden, wonach diese beiden Gas-Feststoff-Teilströme von entgegengesetzten Seiten in die den Drehrohrofen mit dem Vorwärmer verbindende, die Vorcalcinationszone bildende Ofenabgasleitung eingeführt werden, dadurch gekennzeichnet, daß den beiden Kühlluftteilströmen vor ihrem Eintritt in die Ofenabgasleitung ein Drall aufgeprägt wird.

2. Verfahren nach Anspruch 1, dadurch gekennzeichnet, daß den beiden Kühlluftteilströmen ein gegensinniger Drall aufgeprägt wird, dessen Richtung so gewählt ist, daß die beiden Kühlluftteilströme in dem Bereich des Querschnitts der Ofenabgasleitung, in dem die Ofenabgase ihre größte aufwärts gerichtete Geschwindigkeit besitzen, eine nach abwärts gerichtete Geschwindigkeitskomponente aufweisen.

3. Verfahren nach Anspruch 1, bei dem in die beiden Kühlluftteilströme vor ihrem Eintritt in die Ofenabgasleitung je ein Brennstoffteilstrom eingeführt wird, dadurch gekennzeichnet, daß die beiden Brennstoffteilströme gleichsinnig mit den zugehörigen Kühlluftteilströmen verdrallt werden.

4. Verfahren nach Anspruch 1, dadurch gekennzeichnet, daß die Drallachsen der beiden Kühlluftteilströme an der Einmündung der Kühlluftteilströme in die Ofenabgasleitung einen Winkel von 45 bis 60° mit der Vertikalen bilden.

5. Verfahren nach Anspruch 1, dadurch gekennzeichnet, daß die Strömungsgeschwindigkeit der Kühlluftteilströme in einer zur Drallerzeugung dienenden Eintrittsspirale den zwei- bis fünffachen Wert der in der anschließenden Leitung zwischen dieser Eintrittsspirale und der Ofenabgasleitung herrschenden Strömungsgeschwindigkeit besitzt.

6. Anlage zur Wärmebehandlung von feinkörnigem Gut, insbesondere zur Herstellung von Zement, enthaltend

a) einen Drehrohrofen zum Fertigbrennen des Gutes,

b) einen von den Abgasen des Drehrohrofens durchströmten Vorwärmer zum Vorwärmen des Gutes,

c) eine den Drehrohrofen mit dem Vorwärmer verbindende Ofenabgasleitung, die von unten nach oben von den Ofenabgasen durchströmt wird und eine mit zusätzlichem Brennstoff versorgte Vorcalcinationszone zur Calcination des vorgewärmten Gutes vor Eintritt in den Drehrohrofen bildet,

d) einen Kühler, von dem ein Kühlluftstrang zur Ofenabgasleitung führt, der sich in zwei Kühlluftleitungen aufteilt, die an einander gegenüberliegenden Umfangsstellen in die Ofenabgasleitung einmünden, wobei an diese beiden Kühlluftleitungen vor ihrer Einmündung in die Ofenabgasleitung je eine Gutaustragsleitung des Vorwärmers angeschlossen ist, dadurch gekennzeichnet, daß in den beiden Kühlluftleitungen (3, 4) vor ihrer Einmündung in die Ofenabgasleitung (2) Drallerzeugungseinrichtungen (7, 8) vorgesehen sind, die so ausgebildet sind, daß den beiden Kühlluftteilströmen ein gegensinniger Drall aufgeprägt wird und sich in dem Bereich des Querschnitts der Ofenabgasleitung (2), in dem die Ofenabgase ihre größte aufwärts gerichtete Geschwindigkeit besitzen, eine nach abwärts gerichtete Geschwindigkeitskomponente der Kühlluftteilströme ergibt.

7. Anlage nach Anspruch 6, dadurch gekennzeichnet, daß die Drallerzeugungseinrichtungen (7, 8) durch in den beiden Kühlluftleitungen (3, 4) vorgesehene, tangentiale Eintrittsspiralen gebildet werden.

8. Anlage nach Anspruch 6, dadurch gekennzeichnet, daß die Brennstoffzuführungen (15, 16) mit Einrichtungen zur Erzeugung eines mit den zugehörigen Kühlluftteilströmen gleichsinnigen Dralles versehen sind.

9. Anlage nach Anspruch 6, dadurch gekennzeichnet, daß die Brennstoffzuführungen (15, 16) an die Unterseite der unter einem Winkel von 45 bis 60° gegenüber der Vertikalen geneigten Kühlluftleitungen (3, 4) angeschlossen sind.

**Claims**

1. Method for the heat treatment of fine-grained material, especially for the production of cement, in which the material is preheated in a preheater, further heated in a precalcination zone with additional fuel added, fired in a rotary kiln and cooled in a cooler, in which a stream of cooling air extracted from the cooler is divided into at least two branch streams, into which two branch streams of preheated material are introduced, after which these two branch streams of gas and solid material are introduced from opposite sides into the kiln exhaust gas duct which connects the rotary kiln to the preheater and forms the precalcination zone, characterised in that the two branch streams of cooling air are subjected to rotational flow before they enter the kiln exhaust gas duct.

2. Method as claimed in claim 1, characterised in that the two branch streams of cooling air are subjected to an opposing rotational flow the direction of which is chosen so that in the region of the cross-section of the kiln exhaust gas duct in which the kiln exhaust gases travel at their highest upwardly-directed speed the two branch streams of cooling air have a downwardly-directed speed component.

3. Method as claimed in claim 1, in which a branch stream of fuel is introduced into each of the two branch streams of cooling air before they enter the kiln exhaust gas duct, characterised in that the two branch streams of fuel are subjected to rotational flow in the same direction as the associated branch streams of cooling air.

4. Method as claimed in claim 1, characterised in that the axes of rotational flow of the two branch streams of cooling air form an angle of 45 to 60° with respect to the vertical at the point where the branch streams of cooling air open into the kiln exhaust gas duct.

5. Method as claimed in claim 1, characterised in that the flow speed of the branch streams of cooling air in an inlet spiral which serves as means for producing rotational flow is two to five times as high as the flow speed in the adjoining duct between this inlet spiral and the kiln exhaust gas duct.

6. Apparatus for the heat treatment of fine-grained material, especially for the production of cement, containing

a) a rotary kiln for firing the material,

b) a preheater through which the exhaust gases from the rotary kiln flow for preheating the material,

c) a kiln exhaust gas duct which connects the rotary kiln to the preheater, has the kiln exhaust gases flowing through it from the bottom to the top and forms a precalcination zone which is supplied with additional fuel for calcination of the preheated material before it enters the rotary kiln,

d) a cooler from which a stream of cooling air leads to the kiln exhaust gas duct and which is divided into two cooling air ducts which open into the kiln exhaust gas duct at peripheral points which are opposite one another, a material discharge duct from the preheater being connected to each of these two cooling air ducts before the point where they open into the kiln exhaust gas duct, characterised in that means (7, 8) for producing rotational flow are provided in the two cooling air ducts (3, 4) before the point where they open into the kiln exhaust duct (2), the said means (7, 8) being so constructed that the two branch streams of cooling air are subjected to an opposing rotational flow and a downwardly directed speed component of the branch streams of cooling air is produced in the region of the cross-section of the kiln exhaust gas duct (2) in which the kiln exhaust gases travel at their highest upwardly-directed speed.

7. Apparatus as claimed in claim 6, characterised in that the means (7, 8) for producing rotational flow are formed by tangential inlet spirals provided in the two cooling air ducts (3, 4).

8. Apparatus as claimed in claim 6, characterised in that the fuel supply lines (15, 16) are provided with means for producing a rotational flow in the same direction as the associated branch streams of cooling air.

9. Apparatus as claimed in claim 6, characterised in that the fuel supply lines (15, 16) are connected to the underside of the cooling air ducts (3, 4) which are inclined at an angle of 45 to 60° with respect to the vertical.

**Revendications**

1. Procédé de traitement thermique de matière à granulométrie fine, en particulier de production de ciment, la matière passant dans un réchauffeur, puis son chauffage se poursuivant dans une zone de précalcination avec addition d'un complément de combustible, sa cuisson s'achevant dans un four tubulaire rotatif puis cette matière étant refroidie dans un réfrigérant, un courant d'air de refroidissement soutiré du réfrigérant étant subdivisé en au moins deux courants partiels dans lesquels sont introduits deux courants partiels de matière réchauffée, ces deux courants partiels de gaz et de matière étant ensuite introduits par des côtés opposés dans la canalisation des gaz d'échappement du four qui relie ce dernier et le réchauffeur et qui forme la zone de précalcination, procédé caractérisé en ce que des moments angulaires cinétiques, c'est-à-dire des mouvements giratoires sont imposés aux deux courants partiels d'air de refroidissement avant leur entrée dans la canalisation des gaz d'échappement du four.

2. Procédé selon la revendication 1, caractérisé en ce que les deux courants partiels d'air de refroidissement subissent des moments angulaires cinétiques de sens opposés et dont le sens est adopté de manière que ces deux courants présentent une composante de vitesse orientée vers le bas dans la zone de la section de la canalisation des gaz d'échappement du four dans laquelle ces gaz ont la vitesse ascensionnelle maximale.

3. Procédé selon la revendication 1, suivant lequel un courant partiel de combustible est introduit dans les deux courants partiels d'air de refroidissement avant leur entrée dans la canalisation des gaz d'échappement du four, caractérisé en ce qu'un moment angulaire cinétique de même sens que celui des courants partiels correspondants d'air de refroidissement est imposé aux deux courants partiels de combustible.

4. Procédé selon la revendication 1, caractérisé en ce que les axes des moments angulaires cinétiques des deux courants partiels d'air de refroidissement inscrivent un angle de 45 à 60° avec la verticale à l'embouchure de ces courants dans la canalisation des gaz d'échappement du four.

5. Procédé selon la revendication 1, caractérisé en ce que la vitesse d'écoulement des courants partiels d'air de refroidissemeent dans une volute d'entrée constituant le générateur de moment angulaire cinétique est deux à cinq fois plus grande que celle qui règne dans la suite de la canalisation entre cette volute d'entrée et la canalisation des gaz d'échappement du four.

6. Installation de traitement thermique de matière à granulométrie fine, en particulier de production de ciment, comprenant :

a) un four tubulaire rotatif d'achèvement de la cuisson de la matière,

b) un réchauffeur de la matière dans lequel circulent les gaz d'échappement de four tubulaire,

c) une canalisation des gaz d'échappement du four qui relie ce dernier et le réchauffeur, dans laquelle ces gaz d'échappement circulent de bas en haut et qui forme une zone de précalcination de la matière réchauffée avant son entrée dans le four, cette zone étant alimentée en un complément de combustible,

d) un réfrigérant duquel une ligne de tube d'air de refroidissement mène à la canalisation des gaz d'échappement du four, cette ligne se subdivisant en deux canalisations d'air de refroidissement qui débouchent en des lieux opposés de la circonférence dans ladite canalisation des gaz d'échappement du four, une canalisation de décharge de la matière extraite du réchauffeur étant raccordée à chacune de ces deux canalisations d'air de refroidissement en amont de leur embouchure dans la canalisation des gaz d'échappement du four, caractérisée en ce que des dispositifs (7, 8) générateurs de moment angulaire cinétique prévus dans les deux canalisations (3, 4) d'air de refroidissement, en amont de leur embouchure dans la canalisation (2) des gaz d'échappement du four, sont réalisés de manière que des moments angulaires cinétiques de sens opposés soient imposés aux deux courants partiels d'air de refroidissement et qu'il en résulte une composante de vitesse des courants partiels d'air de refroidissement qui soit orientée vers le bas dans la région de la section de la canalisation (2) des gaz d'échappement du four dans laquelle ces gaz ont la vitesse ascensionnelle maximale.

7. Installation selon la revendication 6, caractérisée en ce que les dispositifs générateurs de moment angulaire cinétique (7, 8) sont formés de volutes d'entrée tangentielle prévues dans les deux canalisations (3, 4) d'air de refroidissement.

8. Installation selon la revendication 6, caractérisée en ce que les arrivées de combustible (15, 16) sont équipées de dispositifs générateurs de moment angulaire cinétique de même sens que celui des courants partiels correspondants d'air de refroidissement.

9. Installation selon la revendication 6, caractérisée en ce que les arrivées de combustible (15, 16) sont raccordées au côté inférieur des canalisations d'air de refroidissement (3, 4) qui sont inclinées sur la verticale en inscrivant avec elle un angle de 45 à 60°.

**0 144 597**

*FIG. 1b*

*FIG. 1a*

*FIG. 1*

*FIG. 2*